Europäisches Patentamt

European Patent Office

Office européen des brevets

(11) Numéro de publication : **0 066 507**
**B1**

(12) **FASCICULE DE BREVET EUROPÉEN**

(45) Date de publication du fascicule du brevet :
**30.07.86**

(21) Numéro de dépôt : **82400938.5**

(22) Date de dépôt : **19.05.82**

(51) Int. Cl.⁴ : **B 62 D 5/083**

(54) **Distributeur rotatif hydraulique pour système d'actionnement hydraulique.**

(30) Priorité : **26.05.81 ES 502483**

(43) Date de publication de la demande :
**08.12.82 Bulletin 82/49**

(45) Mention de la délivrance du brevet :
**30.07.86 Bulletin 86/31**

(84) Etats contractants désignés :
**DE FR GB IT**

(56) Documents cités :
**EP-A- 0 008 252**
**EP-A- 0 021 970**
**DE-A- 1 480 666**
**GB-A- 1 308 992**
**US-A- 1 947 991**

(73) Titulaire : **BENDIBERICA S.A.**
**Balmès 243**
**Barcelona 6 (ES)**

(72) Inventeur : **Bacardit, Juan Simon**
**Calle Mallorca 451**
**Barcelona 13 (ES)**

(74) Mandataire : **Le Moenner, Gabriel et al**
**SERVICE BREVETS BENDIX 44, Rue François 1er**
**F-75008 Paris (FR)**

**Description**

La présente invention concerne les distributeurs hydrauliques rotatifs pour systèmes d'actionnement hydrauliques, plus particulièrement pour systèmes de direction assistée de véhicules automobiles, comportant deux organes susceptibles de tourner l'un par rapport à l'autre et reliés respectivement à un dispositif de commande d'entrée et à un dispositif de sortie, du type définissant une cavité sensiblement discoïde divisée en au moins une paire de chambres de travail par des branches faisant saillie radialement à partir d'un premier de ces organes, des moyens pour relier les chambres de travail aux extrémités respectives d'un vérin d'actionnement à double effet, les branches coopérant avec des lumières d'entrée et de sortie ménagées dans l'autre organe pour former des moyens de valve de contrôle de débit de fluide de travail en provenance d'une source de pression, l'un des organes comportant au moins une branche intermédiaire s'étendant dans chacune des deux chambres de la paire de chambres de travail et coopérant avec des lumières de passages ménagées dans l'autre organe pour former des moyens de valve de contrôle de débit de fluide, les moyens de valve associés aux branches étant mis sélectivement en œuvre, selon la rotation relative entre les deux organes, pour contrôler des portions sélectives de la courbe caractéristique couple d'entrée/pression d'actionnement de sortie du distributeur. Un tel distributeur est décrit dans le brevet EP-A-21970.

Avec ce type de distributeur, il est ainsi possible d'exercer sur le dispositif de commande d'entrée, typiquement de la colonne du volant de direction d'un véhicule, différents degrés de réaction, selon que le véhicule se déplace en ligne droite, dans des courbes peu prononcées, ou encore dans des courbes prononcées ou lors de manœuvres de parcage, correspondant à des portions successives à pentes distinctes de la courbe caractéristique couple d'entrée appliqué/pression de travail, ainsi que certains règlements l'exigent.

Dans des dispositifs antérieurs mis au point par la demanderesse, la troisième portion de la courbe caractéristique (virages accentués ou manœuvre de parcage) est contrôlée par une seconde paire d'organes tournants comprenant des branches propres dimensionnées et agencées pour réaliser la troisième réaction, des moyens de valve additionnels, actionnés par le dispositif lui-même, étant prévus pour mettre en œuvre cette seconde paire aux moments opportuns du fonctionnement du dispositif. Il a également été envisagé d'utiliser des branches intermédiaires conformées pour contrôler les deux portions finales pentues de la courbe caractéristique.

La présente invention a pour objet de proposer un distributeur hydraulique de la classe évoquée, n'utilisant qu'une seule paire d'organes rotatifs, et permettant, dans un agencement de construction simple et de faibles coûts de fabrication, de réaliser avec une fiabilité accrue le contrôle de l'intégralité des trois portions fondamentales de la courbe caractéristique, y compris la première portion à pente nulle correspondant à des déplacements de véhicule en ligne droite, en fournissant ainsi des degrés de réaction modulables en fonction de toutes les conditions usuelles de fonctionnement.

Pour ce faire, selon la présente invention, le distributeur hydraulique rotatif, du type sus-mentionné, est caractérisé en ce que la première portion de la courbe caractéristique (à pente nulle) est contrôlée par le bord de fermeture de la branche intermédiaire dirigée vers la branche associée à la lumière de sortie et par le bord de fermeture de la branche associée à la lumière de sortie dirigé vers la branche intermédiaire s'étendant dans la chambre de travail antérieure.

Selon une caractéristique additionnelle de l'invention, le bord de fermeture de la branche associée à la lumière de sortie présente un degré dont la marche forme avec le bord de fermeture de la lumière de sortie associée une section de plus grand passage que la section maximale définie par la branche intermédiaire, le flanc adjacent à la marche dudit degré formant un bord de fermeture qui coopère avec celui de ladite lumière de sortie de façon que la section de passage formée entre les deux soit plus petite que la section de passage correspondante définie par la branche intermédiaire au point de transition entre les première et seconde portions de la caractéristique couple/pression.

D'autres caractéristiques et avantages de la présente invention ressortiront de la description suivante de modes de réalisation, donnés à titre illustratif mais non limitatifs, faite en relation avec les dessins annexés, sur lesquels :

la figure 1 est une coupe axiale schématique d'un distributeur conforme à l'invention ;

la figure 2 est une coupe transversale partielle, suivant l'axe II-II de la figure 1 ;

les figures 3 à 7 sont des coupes développées suivant l'axe III-III de la figure 2, représentant différentes positions angulaires de fonctionnement correspondant aux points (01-2-3-4) de la caractéristique couple/pression ; et

la figure 8 représente la courbe caractéristique couple/pression d'un distributeur correspondant aux précédentes figures.

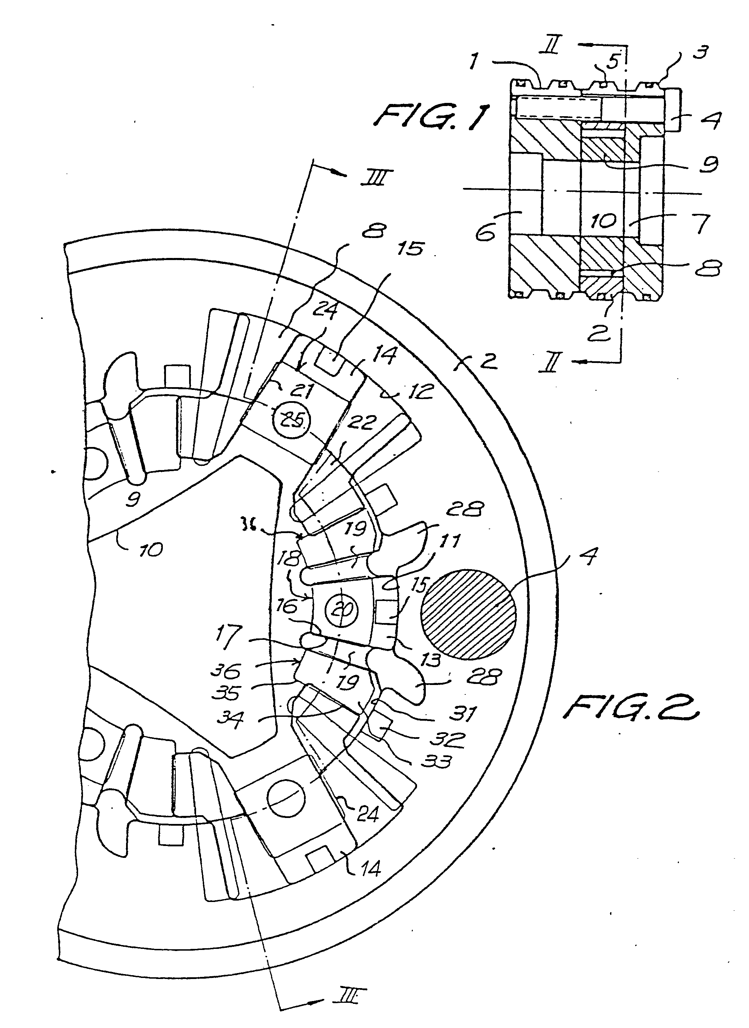

Comme on le voit sur la figure 1, un distributeur selon l'invention comprend un ensemble, formé de trois pièces annulaires coaxiales 1, 2 et 3 maintenues ensemble à l'aide de vis, qui constitue le premier des deux organes à rotation mutuelle et que l'on peut disposer, par des moyens conventionnels non représentés, pour former une enceinte étanche au moyen de joints 5 coopérant avec les parois internes d'un logement fixe formé par exemple dans un boîtier de direction assistée en étant relié à un arbre de sortie les deux pièces extrêmes 1 et 3 sont traversées par des trous axiaux 6 et 7 à section en forme d'étoile à trois pointes, comme représenté sur la figure 2, au travers desquels passe avec jeu, de façon classique, un arbre de commande, non représenté, provenant du volant de direction. Entre la pièce annulaire intermédiaire 2 et les faces axialement opposées des pièces d'extrémité 1 et 3 est définie une cavité sensiblement discoïde, repérée par la référence 8. Dans cet ensemble, de façon également connue en soi, vient s'ajuster hermétiquement sur les parois internes axialement opposées desdites pièces d'extrémité 1 et 3, un rotor 9 dont l'orifice de moyeu 10, également triangulaire est ajusté sur l'axe de commande triangulaire central. La disposition est telle que le rotor 9 est entraîné en rotation dans les deux sens par l'arbre central, celui-ci pouvant toutefois pivoter d'un petit angle prédéterminé dans les trous 6 et 7 des pièces d'extrémité, permettant ainsi de réaliser un petit mouvement de rotation relatif entre les deux organes tournant.

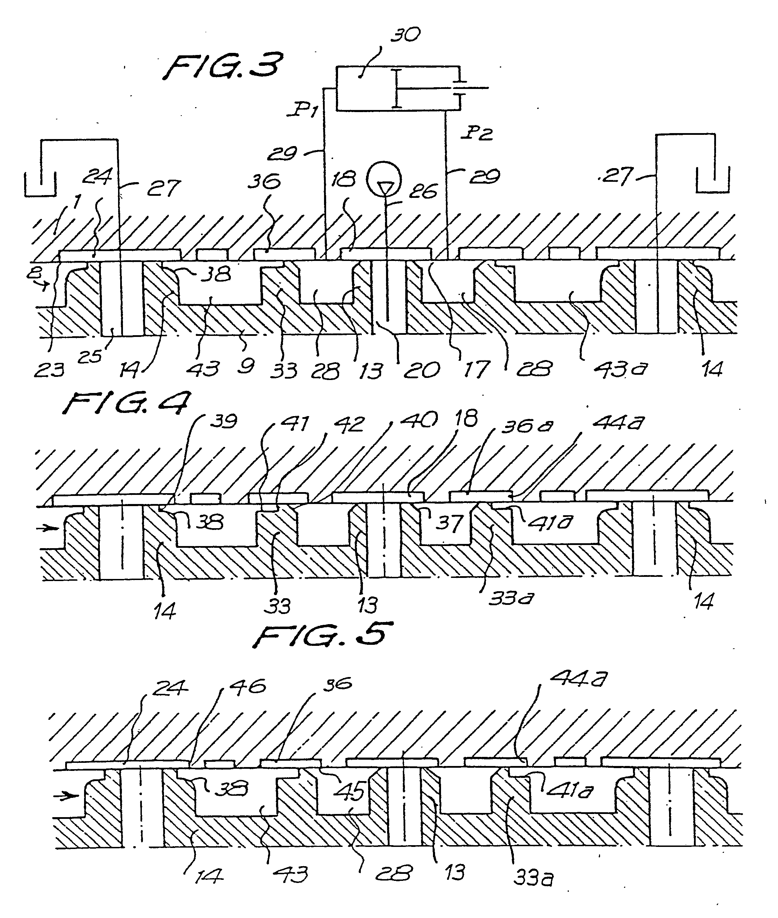

La surface interne de la pièce centrale 2 présente un profil constitué par trois segments angulairement équidistants à surface cylindrique 11 d'un premier (petit) diamètre, et trois segments 12 angulairement équidistants intercalés entre les précédents, également à surface cylindrique et d'un second (plus grand) diamètre, tous ces segments étant centrés sur l'axe de l'ensemble. Le rotor 9 comporte trois branches courtes 13 et trois branches longues 14 dont les surfaces d'extrémités radiales coopèrent hermétiquement par des joints 15 avec les segments respectifs des surfaces cylindriques correspondantes 11 et 12. Les branches courtes 13 ont des bords de fermeture radiaux 16 qui coopèrent en relation de moyen de valve à centre ouvert avec les bords complémentaires 17 de lumières d'entrée 18 formées en vis-à-vis dans les deux parois internes axialement opposées des pièces d'extrémité 1 et 3 ; les bords de fermeture 16 sont définis par des rainures radiales 19 s'étendant vers l'intérieur du corps du rotor et qui débouchent dans la cavité discoïde ; de plus les lumières d'entrée en vis-à-vis 18 communiquent entre elles axialement par des trous 20 percés à travers les branches courtes d'entrée 13. Les branches longues 14 du rotor forment par ailleurs des bords de fermeture 21, en partie définis également par des rainures 22 du rotor similaires aux rainures 19, et qui coopèrent en relation de moyen de valve à centre ouvert avec les bords de fermeture correspondants 23 de lumières de sortie 24, également formées en vis-à-vis dans les surfaces internes axialement opposées des deux pièces d'extrémité 1 et 3 et qui communiquent entre elles axialement par des trous 25 formés dans les branches de sortie 14. Les lumières d'entrée 18 reçoivent le fluide de travail sous pression provenant de la pompe du circuit de direction du véhicule par des conduites, non représentées mais indiquées schématiquement par 26 sur la figure 3 ; les lumières de sortie 24 sont quant à elle reliées au refoulement ou au retour par les conduits indiqués schématiquement en 27 (Figure 3). D'autre part, les chambres 28 formées dans la cavité discoïde de part et d'autre des branches courtes d'entrée 13 communiquent par des conduits figurés en 29 avec les extrémités correspondantes du cylindre d'actionnement 30 de la servodirection.

La surface interne de la pièce intermédiaire comporte en outre trois autres segments à surface cylindrique 31 avec lesquels coopèrent hermétiquement, au moyen des joints 32, les surfaces d'extrémité radiales d'autant de branches intermédiaires 33 formées chacune entre chaque branche courte (d'entrée) et chaque branche longue (de sortie). Ces branches intermédiaires comportent également des bords de fermeture radiaux 34 qui, pour leur part, coopèrent avec des bords de fermeture complémentaires 35 de lumières de passage 36 formées en vis-à-vis dans les faces internes opposées des deux pièces d'extrémité 1 et 2 entre les lumières d'entrée et de sortie.

Les bords de fermeture des différentes branches décrites en relation avec la figure 2 sont représentés de façon schématique, mais ils présentent certaines particularités importantes du point de vue de l'invention qui seront maintenant décrites de façon détaillée en relation avec les figures 3 à 7.

On notera, sur ces figures 3 à 7, que les branches courtes d'entrée 13, correspondant aux lumières d'entrée 18, ont leurs deux bords de fermeture réalisés en forme de chanfreins 37. Les bords de fermeture 21 des branches longues de sortie 14 sont réalisés en forme de décrochements ou degrés constitués par une marche arrondie extérieure 38 et une contre-marche droite intérieure 39. Les branches intermédiaires comportent, sur leurs flancs dirigés vers les branches d'entrée 13, des chanfreins 40 et, sur les flancs opposés, dirigés vers les branches de sortie 14, des décrochements ou degrés formés par une marche ou un plateau extérieur 41 et une contre-marche droite intérieure 42. Les branches et les lumières d'entrée, de sortie, et de passage sont dimensionnées les unes par rapport aux autres de manière que les différentes paires de bords de fermeture complémentaires fonctionnent de façon différenciée suivant la position angulaire relative entre les deux organes rotatifs 1, 3 et 9.

Dans la position de repos ou neutre représentée sur la figure 3, l'huile sous pression, qui arrive de la pompe par les conduits 26, est acheminée vers les conduits de sortie 27 en passant par les lumières d'entrée 18, les chambres de travail 28, les lumières de passage 36, les chambres 43 et les lumières de sortie 24. Dans cette configuration, suivant le principe de valve à relation de centre ouvert, l'huile en provenance de chaque entrée 26 est distribuée et coule symétriquement vers les deux sorties 27 adjacentes en assurant ainsi un équilibre de pressions entre les deux chambres de chaque paire de chambres de travail, c'est-à-dire entre les deux extrémités du vérin de commande 30, ce dernier étant de ce fait maintenu au repos.

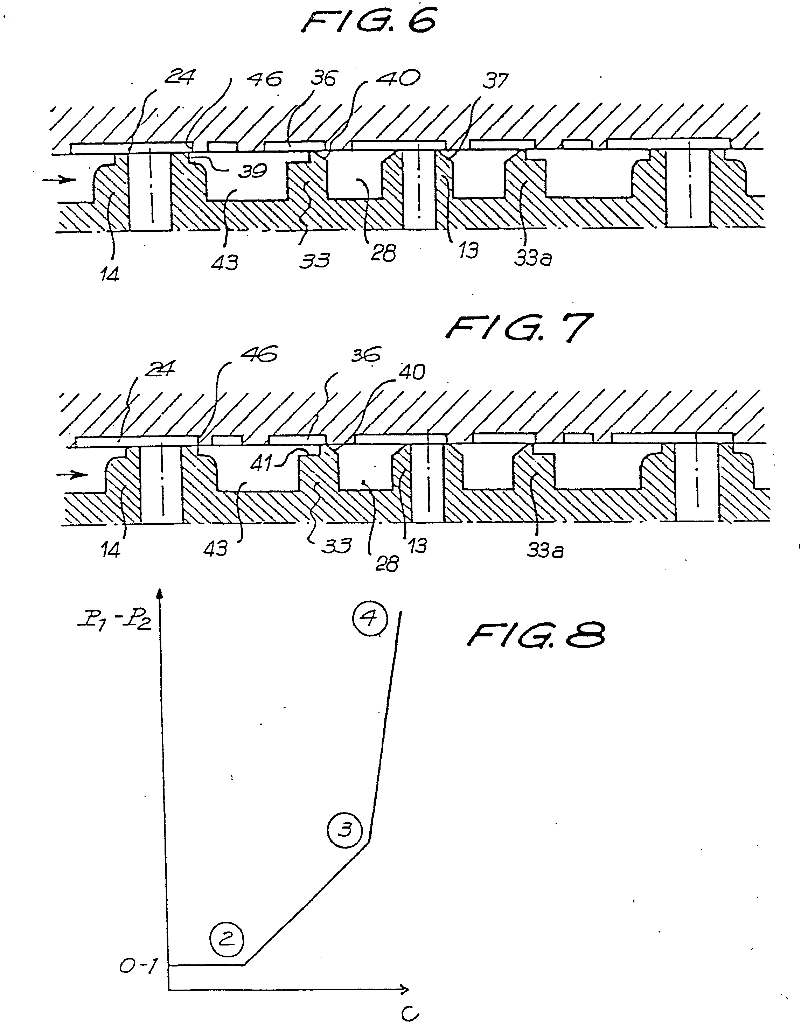

Lorsque l'organe rotatif (rotor) 9 est actionné par le volant de direction de manière à se déplacer dans le sens des flèches sur les figures 4 à 7 (vers la droite), dans une première phase de fonctionnement, entre les points 0-1 et 2 de la caractéristique pression/couple de la figure 8 (première portion de cette caractéristique), la marche 41a de la branche intermédiaire 33a (à droite sur les figures) et la marche arrondie 38 de la branche de sortie 14 définissant respectivement avec les bords de fermeture 44a de la lumière de passage 36a et de la lumière de sortie 24 correspondantes un léger étranglement qui produit une faible augmentation de la pression dans la chambre (de gauche) 43 par rapport à l'autre chambre 43a, ce qui provoque une réaction sur la branche de sortie 14 comme il convient pour rendre plus commode la conduite en ligne droite, condition correspondant au premier tronçon horizontal 0.1-2 de la caractéristique.

En poursuivant le déplacement du rotor 9 dans le sens des flèches, le chanfrein 37 de la branche d'entrée 13 vient se placer à une distance du bord de fermeture adjacent 17 de la lumière d'entrée 18 telle que c'est maintenant cet étranglement qui est mis en œuvre, ce qui se traduit par une hausse de pression dans la chambre (gauche) 28 et provoque l'actionnement du vérin 30 dans le sens correspondant. Cette situation correspond à la seconde portion 2-3 de la caractéristique, c'est-à-dire à la conduite en courbes moyennes.

Lorsque le couple appliqué au volant de direction dépasse le point 3 de la caractéristique pour aborder la troisième portion de la caractéristique, l'étranglement réalisé par la marche 38 de la branche de sortie se maintient à une valeur constante mais, par contre, les chanfreins 37 et 40 des branches d'entrée 13 et intermédiaires 33 entrent en jeu pour coopérer en étranglement avec les bords de fermeture correspondants des lumières d'entrée 18 et de passage 36, respectivement ; cette situation correspond à la portion 3-4 de la caractéristique où la pression de la chambre de travail 28 agit de façon correspondante sur le vérin de commande 30, et, en même temps, applique, dans la chambre 43, contre la branche de sortie 14 une réaction correspondant à la conduite en fortes courbes ou en manœuvre de parking.

Lorsque le couple maximum (point 4 de la caractéristique) est atteint, les étranglements 38-40 et 37-17 respectivement des branches de sortie 14 et d'entrée 13 se ferment totalement, de sorte que les chambres de pression 43 et 28, et de décharge 43a et 28a se trouvent totalement isolées et que la commande du vérin d'actionnement 30 s'effectue sous pression totale de la pompe.

Evidemment, lorsque l'application du couple sur le volant de direction cesse, les organes de rappel ordinairement prévus sur ces distributeurs ramènent le rotor 9 en position neutre ou de centrage représentée sur les figures 2 et 3, ce qui rétablit les communications de centre ouvert et permet le retour du mécanisme de direction en position droite, de manière habituelle.

Le fonctionnement décrit correspond au déplacement du rotor 9 dans le sens des flèches ; il est évident qu'une manœuvre dans le sens contraire donne des actions totalement symétriques par rapport à celles décrites ci-dessus.

L'agencement selon l'invention permet par ailleurs de réaliser diverses variantes : par exemple les moyens de valve ou étranglements 41a-44a pourraient être formés par une seconde branche intermédiaire ou bien, au lieu de cela ou additionnellement, on pourrait utiliser plusieurs ailettes intermédiaires pour obtenir des portions de caractéristiques intermédiaires parmi les portions décrites plus avant.

Le distributeur hydraulique décrit précédemment s'adapte particulièrement à la commande de servodirections pour véhicules, mais il est évident que les distributeurs analogues peuvent être utilisés, avec des modifications de détail appropriées, dans d'autres applications où l'on rencontre des conditions de fonctionnements équivalentes, par exemple pour la commande de machines-outils et équipements similaires.

**Revendications**

1. Distributeur hydraulique rotatif pour système d'actionnement hydraulique, comportant deux organes (1-3, 9) susceptibles de tourner l'un par rapport à l'autre et reliés respectivement à un dispositif de commande d'entrée et à un dispositif de sortie, du type définissant une cavité sensiblement discoïde (8) divisée en au moins une paire de chambres de travail (28) par des branches (13, 14) faisant saillie radialement à partir d'un premier (9) de ces organes, des moyens (29) pour relier les chambres de travail aux extrémités respectives d'un vérin d'actionnement à double effet (30), les branches (13, 14) coopérant avec des lumières d'entrée (18) et de sortie (24) ménagées dans l'autre organe (2, 3) pour former des moyens de valve de contrôle de débit de fluide de travail en provenance d'une source de pression, l'un (9) des organes comportant au moins une branche intermédiaire (33) s'étendant dans chacune des deux chambres de la paire de chambres de travail (28) et coopérant avec des lumières de passages (36) ménagées dans l'autre organe (2, 3) pour former des moyens de valve de contrôle de débit de fluide, les moyens de valve associés aux branches étant mis sélectivement en œuvre, selon la rotation relative entre les deux organes, pour contrôler des portions sélectives (1-2-3-4) de la courbe caractéristique couple d'entrée/pression d'actionnement de sortie du distributeur, caractérisé en ce que la première portion (1-2) de la courbe caractéristique est contrôlée par le bord de fermeture (41a) de la branche intermédiaire (33a) dirigé vers la branche (14) associée à la lumière de sortie (24) et par le bord de fermeture (38) de la branche (14) associée à la lumière de sortie (24) dirigé vers la branche intermédiaire (33) s'étendant dans la chambre de travail antérieure.

2. Distributeur hydraulique selon la revendication 1, caractérisé en ce que le bord de fermeture de la branche (14) associée à la lumière de sortie (24) présente un degré (38, 39) dont la marche (38) forme avec le bord de fermeture (46) de la lumière de sortie associée (24) une section de plus grand passage que la section maximale définie par la branche intermédiaire (33a), le flanc (39) adjacent à la marche (38) dudit degré formant un bord de fermeture qui coopère avec celui (46) de ladite lumière de sortie (24) de façon que la section de passage formée entre les deux soit plus petite que la section de passage correspondante définie par la branche intermédiaire (33a) au point de transition entre les première (1-2) et seconde (2-3) portions de la caractéristique couple/pression.

3. Distributeur hydraulique selon la revendication 1 ou la revendication 2, caractérisé en ce que les flancs des branches intermédiaires (33) dirigés vers les branches (14) associées aux lumières de sortie (24) comportent des degrés dont les marches (41, 41a) déterminent avec le bord de fermeture associé (44a) des lumières de passage correspondantes (36) le débit nécessaire pour définir la première partie de la première portion (1-2) de la caractéristique couple/pression.

4. Distributeur hydraulique selon l'une des revendications 1 à 3, caractérisé en ce que les branches (13) associées aux lumières d'entrée (18) comportent des bords de fermeture chanfreinés (37) coopérant avec les bords des lumières d'entrée (18) pour contrôler la seconde portion (2-3) de la caractéristique couple/pression.

5. Distributeur hydraulique selon la revendication 4, caractérisé en ce que les branches intermédiaires (33, 33a) comprennent des bords de fermeture chanfreinés (40) dirigés vers les branches (13) associées aux lumières d'entrée (18) et contrôlent avec les bords de fermeture chanfreinés (37) des ailettes d'entrée (13) la troisième portion (3-4) de la caractéristique couple/pression.

**Claims**

1. A rotary hydraulic distributor for an hydraulic actuating system, comprising a pair of members (1-3, 9) adapted to rotate with respect to each other and connected, respectively, to an inlet control device and an outlet device, of the type defining a substantially disc-shaped cavity (8) divided into at least a pair of work chambers (28) by branches (13, 14) radially projecting from a first one (9) of these members, means (29) for connecting the work chambers to the respective extremities of a double-acting jack (30), the branches (13, 14) cooperating with inlet (18) and outlet (24) openings provided in the other member (2, 3) for forming valve means for controlling the flow rate of a work fluid supplied by a pressure source, the one (9) of the members comprising at least an intermediary branch (33) extending into each of two chambers of the pair of work chambers (28) and cooperating with ports (36) provided in the other member (2, 3) for forming valve means for controlling the fluid rate, the valve means associated to the arms being selectively operated in accordance with relative rotation of the two members for controlling selective portions (1-2-3-4) of characteristic curve inlet torque/actuating outlet pressure of the distributor, characterized in that the first portion (1-2) of the characteristic curve is controlled by the closing edge (41a) of the intermediary arm (33a) directed towards the branch (14) associated with the outlet opening (24) and by the closing edge (38) of the branch (14) associated with the outlet opening (24) directed towards the intermediary branch (33) extending into the front work chamber.

2. The hydraulic distributor of claim 1, characterized in that the closing edge of the branch (14) associated with the outlet opening (24) presents a step (38, 39) having a step surface (38) forming with the closing edge (46) of the associated outlet opening (24) a flow section greater than the maximum section defined by the intermediary arm (33a), the surface (39) adjacent the step surface (38) of the step forming a closing edge which cooperates with that (46) of said outlet opening (24) such that the flow section formed between the two is smaller than the corresponding flow section defined by the intermediary branch (33a) at the point of transition between the first (1-2) and second (2-3) portions of the torque/pressure characteristic curve.

3. The hydraulic distributor according to claim 1 or claim 2, characterized in that the sides of the intermediary arms (33) which are directed to the branches (14) associated to the outlet openings (24) comprise steps having step surfaces (41, 41a) determining with the associated closing edge (44a) of the corresponding ports (36) the flow rate necessary for defining said first part of the first portion (1-2) of the torque/pressure characteristic curve.

4. The hydraulic distributor according to any of claims 1 to 3, characterized in that the branches (13) associated with the inlet openings (18) comprise chamfered closing edges (37) cooperating with the edges of the inlet openings (18) for controlling the second portion (2-3) of the torque/pressure characteristic curve.

5. The hydraulic distributor according to claim 4, characterized in that the intermediary branches (33, 33a) comprise chamfered closing edges (40) directed towards the branches (13) associated with the inlet openings (18) and controlling with the chamfered closing edges (37) of the inlet arms (13) the third portion (3-4) of the torque/pressure characteristic curve.

**Patentansprüche**

1. Drehbarer hydraulischer Verteiler für eine hydraulische Betätigungsanlage, mit zwei Bauteilen (1-3, 9), die relativ zueinander drehbar und mit einer Einlaßsteuervorrichtung sowie einer Auslaßvorrichtung verbunden sind, und zwar von einer Bauart, bei der ein im wesentlichen scheibenförmiger Raum (8) ·in mindestens zwei Arbeitskammern (28) unterteilt ist durch Arme (13, 14), die von einem ersten (9) dieser Bauteile radial vorstehen, mit Mitteln (29) zum Anschließen· der Arbeitskammern an entsprechenden Enden eines doppeltwirkenden Stellmotors (30), wobei die Arme (13, 14) mit in dem anderen Bauteil (2, 3) gebildeten Einlaß- und Auslaßschlitzen (18, 24) zusammenwirken, um Ventilmittel zur Steuerung des Durchsatzes eines von einer Druckquelle abgegebenen Arbeitsmittels zu bilden, wobei eines (9) der Bauteile mindestens einen Zwischenarm (33) aufweist, der sich in jede der beiden Kammern des Arbeitskammerpaares (28) erstreckt und mit in dem anderen Bauteil (2, 3) gebildeten Durchlaßschlitzen (36) zusammenwirkt, um Ventilmittel zur Steuerung des Strömungsmitteldurchsatzes zu bilden, wobei die den Armen zugeordneten Ventilmittel wahlweise entsprechend der Relativdrehung der beiden Bauteile in Betrieb gesetzt werden, um vorgegebene Abschnitte (1-2-3-4) der Kennlinie Einlaßmoment/Auslaßbetätigungsdruck des Verteilers zu steuern, dadurch gekennzeichnet, daß der erste Abschnitt (1-2) der Kennlinie dadurch gesteuert wird, daß die Schließkante (41a) des Zwischenarmes (33a), die dem dem Auslaßschlitz (24) zugeordneten Arm (14) zugewandt ist, und die Schließkante (38) des dem Auslaßschlitz (24) zugeordneten Arms (14), die dem Zwischenarm (33) zugewandt ist, sich in die vordere Arbeitskammer erstrecken.

2. Hydraulischer Verteiler nach Anspruch 1, dadurch gekennzeichnet, daß die Schließkante des dem Auslaßschlitz (24) zugeordneten Arms (14) eine Stufe (38, 39) aufweist, deren Trittfläche (38) mit der Schließkante (46) des zugehörigen Auslaßschlitzes (24) einen größeren Durchlaßquerschnitt als der durch den Zwischenarm (33a) definierte maximale Querschnitt bildet, wobei die an der Trittfläche (38) angrenzende Seitenfläche (39) der Stufe eine Schließkante bildet, die mit der (46) des Auslaßschlitzes (24) zusammenwirkt, daß der zwischen den beiden gebildete Durchlaßquerschnitt kleiner ist als der entsprechende Durchlaßquerschnitt, der von dem Zwischenarm (33a) an der Übergangsstelle zwischen dem ersten (1-2) und zweiten (2-3) Abschnitt der Momenten/Druck-Kennlinie definiert ist.

3. Hydraulischer Verteiler nach Anspruch 1 oder 2, dadurch gekennzeichnet, daß die Flanken der Zwischenarme (33), die den den Auslaßschlitzen (24) zugeordneten Armen (14) zugewandt sind, Stufen aufweisen, deren Trittflächen (41, 41a) mit der zugeordneten Schließkante (44a) der entsprechenden Durchlaßschlitze (36) den Durchsatz bestimmen, der erforderlich ist, um den ersten Teil des ersten Abschnittes (1-2) der Momenten/Druck-Kennlinie zu definieren.

4. Hydraulischer Verteiler nach einem der Ansprüche 1-3, dadurch gekennzeichnet, daß die den Einlaßschlitzen (18) zugeordneten Arme (13) angefaste Schließkanten (37) aufweisen, die mit den Kanten der Einlaßschlitze (18) zusammenwirken, um den zweiten Abschnitt (2-3) der Momenten/Druck-Kennlinie zu steuern.

5. Hydraulischer Verteiler nach Anspruch 4, dadurch gekennzeichnet, daß die Zwischenarme (33, 33a) angefaste Schließkanten (40) bilden, die den den Einlaßschlitzen (18) zugeordneten Armen (13) zugewandt sind und mit den angefasten Schließkanten (37) der Einlaßarme (13) den dritten Abschnitt (3-4) der Momenten/Druck-Kennlinie steuern.

0 066 507

FIG.1

FIG.2

FIG.3

30

P1

P2

24 27 36 18 26 29 27

29

1

8

23 25 14 43 9 33 28 13 20 17 28 43a 14

38

FIG.4

39 41 42 40 18 36a 44a

38 37 41a

14 33 13 33a 14

FIG.5

24 46 36 44a

38 45 41a

14 43 28 13 33a

# FIG. 6

# FIG. 7

# FIG. 8